# EUROPEAN PATENT APPLICATION

(11) **EP 3 795 348 A1**
(43) Date of publication of application: **24.03.2021**
(21) Application number: 20196938.3
(22) Date of filing: 18.09.2020
(51) Int. Cl.: B32B 7/12, B32B 15/08, B32B 15/082, B32B 15/085, B32B 15/088, B32B 15/09, B32B 15/20, B32B 27/18, B32B 27/30, B32B 27/32, B32B 27/34, B32B 27/36, B65D 65/40

(54) **PHARMACEUTICAL PACKAGING SHEETS CONTAINING GRAPHENE**

(30) Priority: 20.09.2019 KR 20190115764; 14.09.2020 KR 20200117488
(71) Applicant: Korea Aluminium Co., Ltd, Chungcheongbuk-do 27904 (KR)
(72) Inventor: Heo, Chung Hyeon, 28326 Chungcheongbuk-do (KR); Park, Yong Soon, 28747 Chungcheongbuk-do (KR); Kang, Tae Woon, 27341 Chungcheongbuk-do (KR)
(74) Representative: Manitz Finsterwald Patent- und Rechtsanwaltspartnerschaft mbB

(57) **Abstract**

The present application relates to a pharmaceutical packaging sheets containing graphene and a method for manufacturing the pharmaceutical packaging sheet.

## Description

### CROSS-REFERENCE TO RELATED APPLICATION

This application claims the benefit under 35 USC 119(a) of Korean Patent Applications No. 10-2019-0115764 filed on September 20, 2019; and No. 10-2020-0117488 filed on September 14, 2020 in the Korean Intellectual Property Office, the entire disclosures of which are incorporated herein by reference for all purposes.

### BACKGROUND OF THE INVENTION

### 1. Field of the Invention

The present application relates to a pharmaceutical packaging sheets containing graphene and a method for manufacturing the pharmaceutical packaging sheet.

### 2. Description of the Related Art

Polypropylene (hereinafter referred to as 'PP') that is casted, that is, a casting film thereof is called a casting polypropylene film (CPP film). The CPP film has excellent transparency, surface gloss, thermal adhesive strength, and dimensional stability, so that it is mainly used as food packaging material or a pharmaceutical packaging material.

The food packaging material or the pharmaceutical packaging material is required to have an appropriate strength to withstand external shocks, and is also required to have appropriate barrier properties for factors affecting chemical or microbial changes such as moisture, temperature, oxygen, and light. The polypropylene film or the CPP film alone does not satisfy all of the required physical properties, and thus a packaging material including an aluminum foil or an aluminum deposition layer is mainly used to reinforce it. However, the packaging material including aluminum, which is currently commercially available, has a problem that the aluminum layer is too thick, so that an entire packaging material becomes thick, and an amount of aluminum is used a lot.

### [Prior Technical Literature]

### [Patent Literature]

Korean Patent Registration No. 10-1832106.

### SUMMARY OF THE INVENTION

The present application is given to provide a pharmaceutical packaging sheet, which includes a base layer, an adhesive layer, an aluminum layer, and a resin layer, and may further include graphene in each of the layers excluding the aluminum layer, and a method for manufacturing the pharmaceutical packaging sheet.

However, the problem to be solved by the present application is not limited to the problem mentioned above, and other problems that are not mentioned can be clearly understood by those skilled in the art from the following description.

A first aspect of the present application provides a pharmaceutical packaging sheet including: a base layer; a first adhesive layer formed on the base layer; an aluminum layer formed on the first adhesive layer; a second adhesive layer formed on the aluminum layer; and a resin layer formed on the second adhesive layer. At least one layer from the base layer, the first adhesive layer, the second adhesive layer, and the resin layer includes graphene.

A second aspect of the present application provides a method for manufacturing the pharmaceutical packaging sheet according to the first aspect, the method including: forming each of a base layer, an aluminum layer, and a resin layer; and laminating the base layer, the aluminum layer, and the resin layer in order. A first adhesive layer is included between the base layer and the aluminum layer, and a second adhesive layer is included between the aluminum layer and the resin layer. At least one layer from the base layer, the first adhesive layer, the second adhesive layer, and the resin layer includes graphene.

In the pharmaceutical packaging sheet including the aluminum layer according to the implement examples of the present application, at least one layer from the base layer, the first adhesive layer, the second adhesive layer, and the resin layer includes graphene, so that even if a thickness of the aluminum layer is thin, the sheet can be used as a pharmaceutical packaging material. Specifically, in a case where the pharmaceutical packaging sheet is used for the pharmaceutical packaging material, there are effects of an increase in mechanical strength, an increase in barrier property of moisture, oxygen, or the like, and an increase in chemical resistance, thereby increasing flame resistance and impact resistance, and there is an advantage of reducing an amount of aluminum used. In addition, even in a case where only one of the base layer, the first adhesive layer, the second adhesive layer, and the resin layer includes graphene, the desired effects can be exhibited, and even in a case where only two or all of the layers includes graphene, the desired effects can be exhibited.

### BRIEF DESCRIPTION OF THE DRAWINGS

FIG. 1 is a schematic view illustrating a pharmaceutical packaging sheet according to an implement example of the present application.
FIGS. 2A to 2C are photographs confirming durability effects of a pharmaceutical packaging sheet containing graphene in an example of the present application and a pharmaceutical packaging material of the related art.

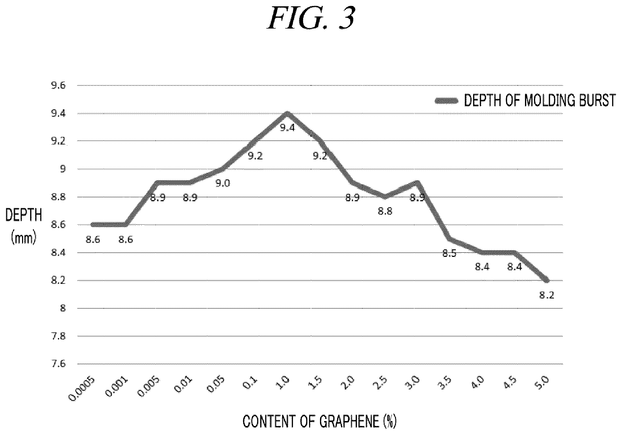

FIG. 3 is a graph illustrating that a depth of molding burst of a pharmaceutical packaging material is measured according to a content of graphene in an example of the present application.

### DETAILED DESCRIPTION OF THE EMBODIMENTS

Hereinafter, implement examples and examples of the present application will be described in detail with reference to the accompanying drawings so that those ordinary skilled in the art may easily implement the present invention. However, the present application may be implemented in various different forms, and is not limited to the implement examples and the examples described herein. In the drawings, portions irrelevant to the description are omitted in order to clearly describe the present invention, and similar reference numerals are assigned to similar portions throughout the specification.

Throughout the specification of the present application, when a portion is "connected" to another portion, it includes not only "directly connected", but also "electrically connected" with an element interposed therebetween.

Throughout the specification of the present application, when a member is said to be positioned "on" another member, this includes not only a case where the member is in contact with the other member, but also a case where another member exists between the two members.

Throughout the specification of the present application, when a certain portion "includes" a certain component, it means that other components may be further included rather than being excluded unless specifically stated to the contrary.

As used in the present specification, the terms "about", "substantially", and the like are used in or close to a numerical value when manufacturing and material tolerances specific to the stated meaning are presented, and in order to aid understanding of the present application, accurate or absolute numerical values are used to prevent unreasonable use of the stated disclosure by unconscionable infringers.

As used throughout the specification of the present application, the term "step to" or "step of" does not mean "step for".

Throughout the specification of the present application, the term "combination(s) thereof" included in the expression of the Markush format refers to one or more mixtures or combinations selected from a group consisting of components described in the expression of the Markush format, and it means to include one or more selected from the group consisting of the components described above.

Throughout the specification of the present application, the description of "A and/or B" means "A or B, or A and B".

Throughout the present specification of the present application, the term "graphene" means that a plurality of carbon atoms are covalently connected to each other to form a polycyclic aromatic molecule, and the carbon atoms connected by the covalent bond form a 6-membered ring as basic repeating unit, but it is also possible to further include a 5-membered ring and/or a 7-membered ring. Therefore, the sheet formed by the graphene may be viewed as a single layer of carbon atoms covalently bonded to each other, but is not limited thereto. The sheet formed by the graphene may have various structures, and such a structure may vary depending on a content of the 5-membered ring and/or the 7-membered ring that may be included in the graphene. In addition, in a case where the sheet formed by the graphene is formed of a single layer, the single layers may be stacked on each other to form a plurality of layers, and an end portion of a side surface of the graphene sheet may be saturated with hydrogen atoms, but is not limited thereto.

Throughout the specification of the present application, the term "graphene oxide" may be abbreviated as "GO". A structure may be included in the present invention in which a functional group containing oxygen such as a carboxyl group, a hydroxy group, or an epoxy group is bonded on the single-layered graphene, but is not limited thereto.

Throughout the specification of the present application, the term "reduced graphene oxide" means graphene oxide of which an oxygen ratio is reduced through a reduction process, and may be abbreviated as "rGO", but is not limited thereto.

Throughout the specification of the present application, the term "Graphene Nano Platelet" means a material having 10 to 100 carbon layers manufactured by a physical or chemical method of natural graphite and may be abbreviated as "GNP", but is limited thereto.

Hereinafter, implement examples and examples of the present application will be described in detail with reference to the accompanying drawings. However, the present application is not limited to the implement examples, the examples, and the drawings.

A first aspect of the present application provides a pharmaceutical packaging sheet including: a base layer; a first adhesive layer formed on the base layer; an aluminum layer formed on the first adhesive layer; a second adhesive layer formed on the aluminum layer; and a resin layer formed on the second adhesive layer, wherein at least one layer from the base layer, the first adhesive layer, the second adhesive layer, and the resin layer includes graphene.

Specifically, in the pharmaceutical packaging sheet according to an implement example of the present application, at least one layer from the base layer, the first adhesive layer, the second adhesive layer, and the resin layer includes graphene, and thereby the sheet can be used as the pharmaceutical packaging material even if a thickness of the aluminum layer is thin. More specifically, in a case where the pharmaceutical packaging sheet is used for the pharmaceutical packaging material, there are effects of an increase in mechanical strength, an increase in a barrier property of moisture, oxygen, or the like, and an increase in chemical resistance.

In an implement example of the present application, the thickness of the aluminum layer may be about 5 µm to about 60 µm. Specifically, the thickness of the aluminum layer may be about 5 µm to about 60 µm, about 12 µm to about 60 µm, about 12 µm to about 55 µm, about 12 µm to about 50 µm, about 12 µm to about 45 µm, about 12 µm to about 40 µm, about 12 µm to about 35 µm, about 12 µm to about 30 µm, about 15 µm to about 60 µm, about 20 µm to about 60 µm, about 25 µm to about 60 µm, about 30 µm to about 60 µm, about 20 µm to about 50 µm, about 25 µm to about 50 µm, about 30 µm to about 50 µm, about 35 µm to about 45 µm, or about 40 µm to about 45 µm, but is limited thereto. The pharmaceutical packaging sheet of the related art had durability that can be implemented as a pharmaceutical packaging material only when the aluminum layer has a thickness of at least 50 µm, but the pharmaceutical packaging sheet according to an implement example of the present application has the thickness of the aluminum layer less than 50 µm, and at least 5 µm, there is an effect of having durability that can be implemented as a pharmaceutical packaging material.

In an implement example of the present application, the thickness of the base layer may be about 30 µm to about 100 µm. Specifically, the thickness of the base layer may be about 30 µm to about 100 µm, about 40 µm to about 100 µm, about 40 µm to about 90 µm, about 40 µm to about 80 µm, about 40 µm to about 70 µm, about 40 µm to about 60 µm, about 50 µm to about 100 µm, about 60 µm to about 100 µm, about 70 µm to about 100 µm, about 80 µm to about 100 µm, about 50 µm to about 90 µm, about 50 µm to about 80 µm, or about 60 µm to about 80 µm, but is not limited thereto.

In an implement example of the present application, the thickness of the first adhesive layer or the second adhesive layer may be about 1 µm to about 10 µm. Specifically, the thickness of the first adhesive layer or the second adhesive layer may be about 1 µm to about 10 µm, about 1 µm to about 8 µm, about 1 µm to about 6 µm, about 1 µm to about 4 µm, about 3 µm to about 10 µm, about 5 µm to about 10 µm, about 7 µm to about 10 µm, about 3 µm to about 7 µm, about 4 µm to about 6 µm, or about 1 µm to about 3 µm, but is not limited thereto.

In an implement example of the present application, the thickness of the resin layer may be about 10 µm to about 30 µm. Specifically, the thickness of the resin layer may be about 10 µm to about 30 µm, about 15 µm to about 30 µm, about 20 µm to about 30 µm, about 25 µm to about 30 µm, about 15 µm to about 25 µm, about 15 µm to about 20 µm, or about 20 µm to about 25 µm, but is not limited thereto.

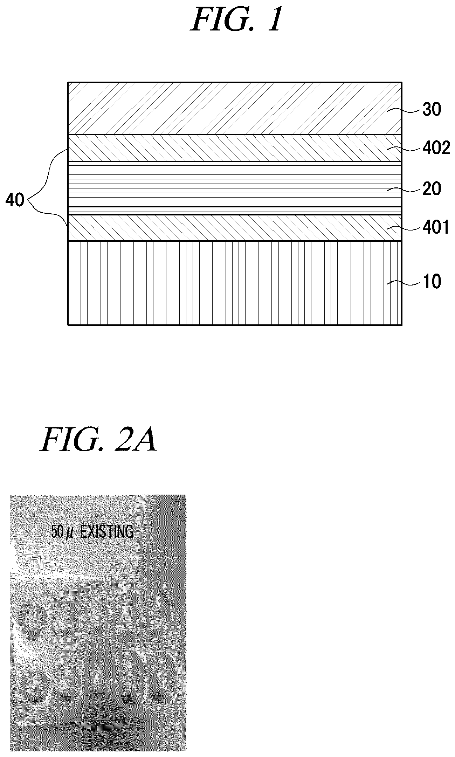

Referring to FIG. 1, the pharmaceutical packaging sheet according to an implement example of the present application may be configured of an base layer 10 having a thickness of about 40 µm to about 100 µm, an aluminum layer 20 having a thickness of about 12 µm to about 60 µm, a first adhesive layer 401 or a second adhesive layer 402 having a thickness of about 1 µm to about 10 µm, and a resin layer 30 having a thickness of about 15 µm to about 30 µm. While the related art has a problem of cracking or bursting even if the aluminum layer having a thickness of 40 µm is configured, in an implement example of the present application, there is an advantage that the pharmaceutical packaging material can be implemented even if the aluminum layer has a thickness of at least 12 µm without any problem. In addition, as an implement example, in a case where the CPP film is used as the base layer, the thickness of the base layer may be 40 µm to 100 µm, and in a case where the PVC film is used as the base layer, the thickness of the base layer may be 60 µm to 100 µm.

In FIG. 1, the pharmaceutical packaging sheet is configured of the base layer 10; the aluminum layer 20; the resin layer 30; and the adhesive layer 40 including the first adhesive layer 401 and the second adhesive layer 402, but this is only an example, and a sheet which further includes a film that can be used for the pharmaceutical packaging material, or a sheet which includes layers less than those layers described above is also included in an implement example of the present application, as long as it does not depart from the scope of the technical idea of the present application. As an example, the pharmaceutical packaging sheet may be configured of 5 layers, 7 layers, 9 layers, or 11 layers, including additional films that can be used in the pharmaceutical packaging material, and may be configured of 2 layers including layers less than those layers described above.

In an implement example of the present application, the graphene may increase the durability of the pharmaceutical packaging sheet.

In an implement example of the present application, each of the first adhesive layer, the second adhesive layer, or both may include the graphene, and the content of the graphene may be 0.005 parts by weight to 10 parts by weight with respect to 100 parts by weight of each of the first adhesive layer and the second adhesive layer. If the content of the graphene is less than 0.005 parts by weight, the effect of increasing the durability of the pharmaceutical packaging sheet is insignificant, and the durability thereof appears as that in the related art. If the content of graphene exceeds 10 parts by weight, there is a problem that the durability is lowered and the adhesive strength of the adhesive layer decreases. Specifically, the content of the graphene may be 0.005 parts by weight to 10 parts by weight, 0.005 parts by weight to 5 parts by weight, 0.005 parts by weight to 3 parts by weight, 0.005 parts by weight to 2 parts by weight, 0.01 parts by weight to 2 parts by weight, 0.01 parts by weight to 1.5 parts by weight, 0.05 parts by weight to 1.5 parts by weight, or 0.1 parts by weight to 1.5 parts by weight with respect to100 parts by weight of each of the first adhesive layer and the second adhesive layer.

In an implement example of the present application, the base layer may include the graphene, and the content of the graphene may be 0.005 parts by weight to 10 parts by weight with respect to 100 parts by weight of the base layer. If the content of graphene is less than 0.005 parts by weight, the effect of increasing the durability of the pharmaceutical packaging sheet is insignificant, and the durability thereof appears as that in the related art. If the content of graphene exceeds 10 parts by weight, there is a problem that the durability thereof is rather reduced compared to that of the related art. Specifically, the content of the graphene may be 0.005 parts by weight to 10 parts by weight, 0.005 parts by weight to 5 parts by weight, 0.005 parts by weight to 3 parts by weight, 0.005 parts by weight to 2 parts by weight, 0.01 parts by weight to 1.5 parts by weight, 0.05 parts by weight to 1.5 parts by weight, or 0.1 parts by weight to 1.5 parts by weight with respect to 100 parts by weight of the base layer.

In an implement example of the present application, the resin layer may include the graphene, and the content of the graphene may be 0.005 parts by weight to 10 parts by weight with respect to 100 parts by weight of the resin layer. If the content of the graphene is less than 0.005 parts by weight, the effect of increasing the durability of the pharmaceutical packaging sheet is insignificant, and the durability thereof appears as that in the related art. If the content of the graphene exceeds 10 parts by weight, there is a problem that the durability thereof is rather reduced compared to that of the related art. Specifically, the content of the graphene may be 0.005 parts by weight to 10 parts by weight, 0.005 parts by weight to 5 parts by weight, 0.005 parts by weight to 3 parts by weight, 0.005 parts by weight to 2 parts by weight, 0.01 parts by weight to 2 parts by weight, 0.01 parts by weight to 1.5 parts by weight, 0.05 parts by weight to 1.5 parts by weight, or 0.1 parts by weight to 1.5 parts by weight with respect to 100 parts by weight of the resin layer.

In an implement example of the present application, the graphene is at least one selected from graphene, graphene oxide (GO), reduced graphene oxide (rGO), and graphene nanoplatelet. Specifically, the graphene oxide includes a plurality of graphene oxide sheets, the reduced graphene oxide includes a plurality of reduced graphene oxide sheets, and each of the plurality of graphene sheets and the plurality of reduced graphene oxide sheets may include an oxygen-containing functional group and/or pinholes. For example, the reduced graphene oxide may be manufactured by obtaining graphene oxide by peroxidating graphite, and by obtaining reduced graphene oxide by reducing the obtained graphene oxide, but is not limited thereto. In the process of peroxidation of the graphite, the oxygen-containing functional groups are generated at an edge of the graphene and an inside of the graphene, and defects occur to generate the pinholes, so that each of the reduced graphene oxide sheets which are finally obtained may include the oxygen-containing functional group and/or the pinholes.

In an implement example of the present application, the oxygen-containing functional group may include one selected from a hydroxyl group, an epoxy group, a carboxyl group, a ketone group, and a group consisting of combinations thereof, but is not limited thereto.

In an implement example of the present application, an interval of a void between the plurality of graphene oxide sheets and the plurality of reduced graphene oxide sheets may be about 1 nm to about 20 nm, but is not be limited thereto.

In the exemplary implement example of the present application, a size of each of the pinholes formed in the graphene oxide sheet and the reduced graphene oxide sheet may be about 0.1 nm to about 10 nm, but is not be limited thereto.

In an implement example of the present application, the base layer may include polyvinyl chloride (PVC), polypropylene (PP), or casting polypropylene (CPP). Specifically, the base layer is a portion that becomes a surface of the pharmaceutical packaging material, and polyvinyl chloride (PVC), polypropylene (PP), or casting polypropylene (CPP) can used to implement a transparent film having high mechanical strength. In particular, polyvinyl chloride has excellent flexibility, excellent adhesion, and is similar to cellophane in tensile strength, elongation, tear strength, or the like, but has less gas permeability than that of cellophane. Therefore, it is suitable for use as a component for the pharmaceutical packaging. In addition, the polypropylene is hygienic with colorless, odorless, and non-toxic, and has an advantage of being inexpensive due to its lowest specific gravity among plastics, and good gas permeability makes it suitable for use as a component for pharmaceutical packaging.

In an implement example of the present application, the aluminum layer may include an aluminum foil, but is not limited thereto.

In an implement example of the present application, each or both of the first adhesive layer and the second adhesive layer may include a polyurethane-based adhesive, an acrylic adhesive, an epoxy-based adhesive, a polyolefin-based adhesive, an elastomer-based adhesive, or a fluorine-based adhesive, but is not limited thereto.

In an implement example of the present application, the resin layer may include nylon (NY), polyethylene terephthalate (PET), polypropylene (PP), or polyamide (PA). Specifically, the resin layer may use resin that can improve the shock absorption during an external impact of the pharmaceutical packaging material, and nylon (NY), polyethylene terephthalate (PET), polypropylene (PP) or polyamide (PA) can be used. Nylon 6, 11, 12, 66, and 610emd are commercialized as nylon, but nylon 6 is suitable as the casting film and has advantages of better mechanical strength than those of other films, less deterioration in strength at low temperature, and excellent pinhole resistance, and less gas permeability.

In an implement example of the present application, a depth of the molding burst of the pharmaceutical packaging sheet may be greater than 8.6 mm and less than 9.5 mm. Specifically, the pharmaceutical packaging sheet may have increased durability by containing the graphene in at least one layer from the base layer, the first adhesive layer, the second adhesive layer, and the resin layer includes graphene. Accordingly, in a case where the pharmaceutical packaging sheet is pressed after being formed, the pharmaceutical packaging sheet may have durability that does not burst even if a depth thereof being tolerated increases. More specifically, the depth of the molding burst may be greater than 8.6 mm and less than 9.5 mm; greater than 8.6 mm and less than 9.5 mm; greater than 9.0 mm and less than 9.5 mm; or greater than 9.1 mm and less than 9.5 mm.

A second aspect of the present application is to provide a method for manufacturing the pharmaceutical packaging sheet according to the first aspect, the method including: forming each of the base layer, the aluminum layer, and the resin layer; and laminating the base layer, the aluminum layer, and the resin layer in order. The first adhesive layer is included between the base layer and the aluminum layer, and the second adhesive layer is included between the aluminum layer and the resin layer, wherein at least one layer from the base layer, the first adhesive layer, the second adhesive layer, and the resin layer includes graphene.

In the first aspect and the second aspect, contents that may be in common with each other can be applied to both the first aspect and the second aspect even if the description thereof is omitted.

In an implement example of the present application, forming the base layer, the resin layer, or both may include melting the raw material of each of the base layer and the resin layer at a temperature of 230°C to 250°C, and extruding the melted material at an extrusion amount of 700kg/h to 1000 kg/h to supply to a T-die, casting the melted material to be processed. In this case, when describing an average thickness of each thereof, the base layer may be formed to be about 40 µm to about 100 µm, and the resin layer may be formed to be about 10 µm to about 30 µm, but is not limited thereto.

In an implement example of the present application, the thickness of the aluminum layer may be about 5 µm to about 60 µm. Specifically, the thickness of the aluminum layer may be about 5 µm to about 60 µm, about 12 µm to about 60 µm, about 12 µm to about 55 µm, about 12 µm to about 50 µm, about 12 µm to about 45 µm, about 12 µm to about 40 µm, about 12 µm to about 35 µm, about 12 µm to about 30 µm, about 15 µm to about 60 µm, about 20 µm to about 60 µm, about 25 µm to about 60 µm, about 30 µm to about 60 µm, about 20 µm to about 50 µm, about 25 µm to about 50 µm, about 30 µm to about 50 µm, about 35 µm to about 45 µm, or about 40 µm to about 45 µm, but is not limited thereto.

In an implement example of the present application, the forming the aluminum layer includes processing aluminum into a plate shape by allowing a raw material (strip) containing aluminum to pass between two rolls rotating at a recrystallization temperature or lower. At this time, the operation may be repeated 1 to 35 times depending on a desired thickness. In addition, the process may include forming the aluminum layer to have an average thickness of 12 µm to 60 µm.

In an implement example of the present application, the laminating may include dry lamination, but is not limited thereto. Specifically, the first adhesive layer may be formed through the dry lamination to increase viscosity by applying a first adhesive to one or more of the base layer and the aluminum layer, and volatilizing a diluted solvent in a space such as a drying chamber. In addition, the second adhesive layer may be formed through the dry lamination to increase viscosity by applying a second adhesive to one or more of the aluminum layer and the resin layer, and volatilizing a dilute solvent in a space such as a drying chamber.

Hereinafter, the present application will be described in more detail with reference to examples, but the present application is not limited thereto.

### [Examples]

### 1. Example

### 1-1. Formation of Base Layer and Resin Layer

Polyvinyl chloride and nylon resin were prepared, melted at 240°C, extruded at an extrusion amount of 800 kg/h, and supplied to a T-die. Thereafter, polyvinyl chloride melt was casted and processed to form a base layer having an average thickness of 40 µm to 50 µm, and the nylon resin melt was casted and processed to form a base layer having an average thickness of 15 µm to 30 µm.

### 1-2. Formation of Aluminum Layer

An aluminum raw material (strip) was prepared and passed between two rolls rotating at a temperature of the recrystallization temperature or lower, and aluminum was processed into a plate shape to form an aluminum layer having an average thickness of 35 µm to 40 µm.

### 1-3. Formation of Pharmaceutical Packaging Material

The laminated pharmaceutical packaging material having an average thickness of 90 µm to 185 µm was formed by disposing the base layer, the aluminum layer, and the resin layer in order in a roller for lamination, actuating the roller, and taking the base layer, the aluminum layer, and the resin layer into the rollers in order. The adhesive used for the laminate was an acrylic adhesive, and the adhesive containing 0.01 parts by weight of graphene with respect to 100 parts by weight of the entire adhesive was used.

### 2. Comparative Example 1

A pharmaceutical packaging material was synthesized under the same conditions as those in the example described above, except that the aluminum layer had a thickness of 50 µm and the adhesive component did not contain graphene.

### 3. Comparative Example 2

A pharmaceutical packaging material was synthesized under the same conditions as those in the example described above, except that the aluminum layer had a thickness of 40 µm and the adhesive component did not contain graphene.

### Experimental Example 1: Comparison of Durability of Pharmaceutical Packaging Material Containing Graphene and Related Art

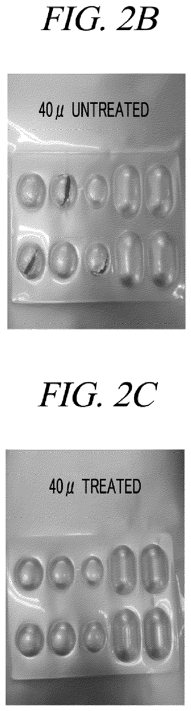

As a result of confirming the bursting properties of the pharmaceutical packaging materials of Example, Comparative Example 1, and Comparative Example 2 manufactured as described above, Comparative Example 1 in which the thickness of the aluminum layer was 50 µm and the Example in which the thickness of the aluminum layer was 35 µm to 40 µm were kept intact without bursting (FIGS. 2A and 2C). However, in Comparative Example 2 in which the thickness of the aluminum layer was 40 µm, it was confirmed that cracks or bursts was found on the surface (FIG. 2B). Therefore, it was confirmed that Example 1 containing graphene had an effect of increasing durability that can fully implement the pharmaceutical packaging material even if the aluminum layer is formed thin, and it was confirmed that there was an advantage of remarkably reducing the amount of aluminum used (FIGS. 2A to 2C).

### Experimental Example 2: Comparison of Durability of Pharmaceutical Packaging Material Containing Graphene and Related Art by Measuring Depth of Molding Burst

A pharmaceutical packaging material was prepared in the same manner as that in the example described above, and a difference in effect according to the content of graphene was confirmed. Specifically, in the adhesive layer, 0.0005 parts by weight, 0.001 parts by weight, 0.005 parts by weight, 0.01 parts by weight, 0.05 parts by weight, 0.1 parts by weight, 1.0 parts by weight, 1.5 parts by weight, 2.0 parts by weight, 2.5 parts by weight, 3.0 parts by weight, 3.5 parts by weight, 4.0 parts by weight, 4.5 parts by weight, 5.0 parts by weight of graphene with respect to the total 100 parts by weight of the entire adhesive were added to manufacture a pharmaceutical packaging material. Then, the effect depending on the graphene content was confirmed by measuring the depth of the molding burst where the pharmaceutical packaging material began to burst. The depth of the molding burst means a depth at which the sheet can withstand without rupture when pressing is applied. The depth of the molding burst was determined by comparison based on the related art already available on the market, and the depth of the molding burst of the commercially available sheet was 8.6 mm. The results are illustrated in Table 1 below.

**[Table 1]**

| Content of Graphene | Specification | Depth of Molding Burst |
|---|---|---|
| 0.0005 | | 8.6 |
| 0.001 | 1) NY25 / ■ / AL50 / PVC60 | 8.6 |
| 0.005 | | 8.9 |
| 0.01 | 2) NY25 / AL50 / ■ / PVC60 | 8.9 |
| 0.05 | | 9.0 |
| 0.1 | 3) NY25 / ■ / AL50 / | 9.2 |
| 1.0 | | 9.4 |
| 1.5 | ■ / PVC60 | 9.2 |
| 2.0 | | 8.9 |
| 2.5 | | 8.7 |
| 3.0 | | 8.9 |
| 3.5 | | 8.5 |
| 4.0 | | 8.4 |
| 4.5 | | 8.4 |
| 5.0 | | 8.2 |

As a result of confirming the result of the molding burst, when the content of the graphene was 0.0005 parts by weight and 0.001 parts by weight, the depth of the molding burst of the pharmaceutical packaging material appeared to be 8.6 mm, it was confirmed that the depth was the same as that of the molding burst of the related art, and confirmed that it showed equivalent performance to that of the existing product when the content of the graphene was 0.001 parts by weight or lower. In addition, when the content of the graphene was 3.5 parts by weight to 5 parts by weight, it was confirmed that the depth of the molding burst of the pharmaceutical packaging material was 8.5 mm or lower, thereby confirming lower performance appeared than that of the standard of the existing product when the content of the graphene was 3.5 parts by weight or more. On the other hand, when the content of the graphene was 0.005 to 3.0 parts by weight, the depth of the molding burst exceeding 8.6 mm appeared, and a depth up to 9.4 mm (1 part by weight) was measured, thereby confirming that the effect of improving durability superior to the existing product was realized depending on the addition of graphene.

In addition, in Experimental Examples 1 and 2, only a case where graphene was contained in the adhesive was confirmed, but the results confirmed that the same effect appeared even in a case where the graphene was contained in the base layer or the resin layer.

The foregoing description of the present application is for illustrative purposes only, and those ordinary skilled in the art to which the present application pertains will be able to understand that it is possible to easily transform it into other specific forms without changing the technical spirit or essential features of the present application. Therefore, it should be understood that the examples described above are illustrative in all respects and not limiting. For example, each component described as a single type may be implemented in a distributed manner, and similarly, components described as being distributed may also be implemented in a combined form.

The scope of the present application is indicated by the claims to be described later rather than the detailed description, and all changes or modified forms derived from the meaning and scope of the claims, and equivalent concepts thereof should be interpreted as being included in the scope of the present application.

### <Description of symbols>

10: base layer
20: aluminum layer
30: resin layer
40: adhesive layer
401: first adhesive layer
402: second adhesive layer

## Claims

1. A pharmaceutical packaging sheet, comprising:
a base layer;
a first adhesive layer formed on the base layer;
an aluminum layer formed on the first adhesive layer;
a second adhesive layer formed on the aluminum layer; and
a resin layer formed on the second adhesive layer,
wherein at least one layer from the base layer, the first adhesive layer, the second adhesive layer, and the resin layer includes graphene.

2. The pharmaceutical packaging sheet according to claim 1,
wherein the aluminum layer has a thickness of 5 µm to 60 µm.

3. The pharmaceutical packaging sheet according to claim 1,
wherein the graphene increases a durability of the pharmaceutical packaging sheet.

4. The pharmaceutical packaging sheet according to claim 1,
wherein each or both of the first adhesive layer and the second adhesive layer includes the graphene, and
wherein a content of the graphene is 0.005 parts by weight to 10 parts by weight with respect to 100 parts by weight of each of the first adhesive layer and the second adhesive layer.

5. The pharmaceutical packaging sheet according to claim 1,
wherein the base layer includes the graphene, and
wherein a content of the graphene is 0.005 parts by weight to 10 parts by weight with respect to 100 parts by weight of the base layer.

6. The pharmaceutical packaging sheet according to claim 1,
wherein the resin layer includes the graphene, and
wherein a content of the graphene is 0.005 parts by weight to 10 parts by weight with respect to 100 parts by weight of the resin layer.

7. The pharmaceutical packaging sheet according to claim 1,
wherein the graphene is at least one selected from graphene, graphene oxide (GO), reduced graphene oxide (rGO), and graphene nanoplatelet.

8. The pharmaceutical packaging sheet according to claim 1,
wherein the base layer includes polyvinyl chloride (PVC), polypropylene (PP), or casting polypropylene (CPP).

9. The pharmaceutical packaging sheet according to claim 1,
wherein each or both of the first adhesive layer and the second adhesive layer includes a polyurethane-based adhesive, an acrylic adhesive, an epoxy-based adhesive, a polyolefin-based adhesive, an elastomer-based adhesive, or a fluorine-based adhesive.

10. The pharmaceutical packaging sheet according to claim 1,
wherein the resin layer includes nylon (NY), polyethylene terephthalate (PET), polypropylene (PP), or polyamide (PA).

11. A method for manufacturing the pharmaceutical packaging sheet according to claim 1, comprising:
forming each of a base layer, an aluminum layer, and a resin layer; and
laminating the base layer, the aluminum layer, and the resin layer in order,
wherein a first adhesive layer is included between the base layer and the aluminum layer, and a second adhesive layer is included between the aluminum layer and the resin layer, and
wherein at least one layer from the base layer, the first adhesive layer, the second adhesive layer, and the resin layer includes graphene.

12. The method for manufacturing a pharmaceutical packaging sheet according to claim 11,
wherein the aluminum layer has a thickness of 5 µm to 60 µm.
